# EUROPEAN PATENT SPECIFICATION

(11) **EP 2 986 524 B1**
(45) Date of publication and mention of the grant of the patent: **10.05.2017**
(21) Application number: 14730993.4
(22) Date of filing: 25.03.2014
(51) Int. Cl.: B65D 30/06, B65D 33/06, B65D 85/34, B65D 25/04

(54) **CONTAINER FOR FRUIT AND VEGETABLE PRODUCTS AND METHOD FOR MAKING THE CONTAINER AND FOR PACKING SUCH PRODUCTS**
BEHÄLTER FÜR OBST- UND GEMÜSEPRODUKTE UND VERFAHREN ZUR HERSTELLUNG DES BEHÄLTERS UND ZUM VERPACKEN SOLCHER PRODUKTE
RECIPIENT POUR PRODUITS DE FRUIT ET LEGUME ET PROCEDE DE FABRICATION DU RECIPIENT ET D'EMBALLAGE DE TELS PRODUITS

(30) Priority: 15.04.2013 IT BO20130164
(43) Date of publication of application: 24.02.2016
(73) Proprietor: SORMA S.P.A., 47023 Cesena FO (IT)
(72) Inventor: MERCADINI, Andrea, I-47522 Bologna (IT)
(74) Representative: Fuochi, Riccardo
(86) International application number: PCT/IB2014/060137
(87) International publication number: WO 2014/170774

(56) References cited:
- EP-A1- 0 677 449
- EP-A1- 2 210 735
- DE-A1- 2 636 821
- ES-U- 1 027 802
- NL-C- 70 363
- US-A- 5 076 040
- US-A- 5 912 197
- US-A1- 2009 046 957

## Description

### TECHNICAL FIELD OF THE INVENTION

The present invention relates to a container for fruit and vegetable products and method for making the container and for packing such products, according to the preamble of claims 1 and 14 respectively. In particular the present invention relates to a container for fruit and vegetable products that allows optimal visibility of the products themselves contained in it, and at the same time allows it to be easily and safely transported by the user.

### STATE OF THE ART

There are known containers for fruit and vegetable products, suitable for containing products of various kinds like for example potatoes, tubers in general, onions, and yet more, generally consisting of mesh portions associated with extended portions of film made from synthetic material.

The mesh and film portions can be associated with each other for example through welding, or even gluing, crimping, or in yet other ways.

The film portions display information of various kinds, like for example concerning the goods, nutrition, storage and expiry date of the products, and the like, as well as writing and commercial data, producer's logos, and yet more data.

However, containers of this known type, due to the aforementioned extended film portions, do not allow the products contained inside them to be seen clearly, in this way preventing the user from checking the appearance, the integrity or the cleanliness of the fruit and vegetable products.

In many cases, containers do not have adequate handgrip portions for the user, making them awkward to transport; in other cases the existing containers instead have handles specially made in the processing steps, which obviously lengthens the production times, also worsening the final costs of the containers themselves.

Spanish utility model ES1027802U teaches, for example, a bag with mesh casing and a label that has a first strip element extending from one end of the bag to the other and externally opposite the rear face of the bag, as well as a second and a third strip element each arranged externally opposite the front face of the bag and each welded to a respective portion of the first strip element with interposition of the ends of the bag, said ends thus being clamped one between the first and the second strip element welded together and the other between the first and the third strip element welded together.

The European patent application with publication number EP2535281A1, on the other hand, teaches a bag with mesh casing and a label having two elements arranged on opposite sides to one another with respect to the bag and connected together at the ends of the casing, so that both the ends are locked between the two strip elements.

Bags with structures similar to those indicated above are taught by EP2210735A1, US5912197, WO2011034038A1.

In order to obtain all of the bags according to the patent documents mentioned above, it is necessary to use a substantial amount of material for the label, taking into account, furthermore, the fact that it is necessary to foresee label elements or components arranged on opposite sides to one another at the two ends of the bag and, also for this reason, the packing and fastening procedure of the label to the casing involves a series of complex steps that are expensive to carry out.

### PURPOSES OF THE INVENTION

The technical task of the present invention is therefore to devise a container, such as a bag for fruit and vegetable products and method for making the container and packing the such products, which allows optimal visibility of the products contained inside it, so as to allow the user to easily and quickly check the appearance, the integrity and the cleanliness of the products themselves, still displaying all the necessary information and data.

In such a technical task, a particular purpose of the present invention is to make a container for fruit and vegetable products that can be easily and safely transported by the user.

A further purpose of the present invention is to devise a method for making the container and packing such products that requires simple and quick processing steps, cutting production times and costs.

Another purpose of the present invention is to provide a new bag as stated above having an amount of material for a band or band component, such as a label, that is less than the solutions proposed previously.

This task and this purpose are accomplished by the container for fruit and vegetable products according to the attached claim 1.

The container for fruit and vegetable products comprises at least one closed mesh casing for storing the products, and at least one shaped band comprising at least one first end portion and at least one second end portion suitable for being associated with the respective ends to the mesh casing; the shaped band also comprising at least one narrower intermediate portion for connecting between the first end portion and the second end portion, such an intermediate portion is suitable for making a handgrip for the user, so as to allow optimal visibility of the fruit and vegetable products packed and easy and safe transportation thereof.

Further advantageous characteristics are described in the dependent claims.

### BRIEF DESCRIPTION OF THE DRAWINGS.

The characteristics of the invention will become clearer to any man skilled in the art from the following description and from the attached tables of drawings, given as a non-limiting example, in which:
figure 1 is a perspective view of a possible embodiment of the container for fruit and vegetable products, according to the present invention;
figure 2 is a section view of the container of figure 1;
figure 3 is a perspective view of another possible embodiment of the container for fruit and vegetable products, according to the present invention;
le figure 4 and 5 schematically illustrate in detail engagement areas of a band with a casing in a container according to the present invention;
figure 6 illustrates a longitudinal section view of a container according to figure 1;
figure 7 is a perspective view of a second possible embodiment of the container for fruit and vegetable products, according to the present invention;
figure 8 is a perspective view according to another angle of the container for fruit and vegetable products highlighting a hand grip for the user, according to the present invention;
figure 9 is a perspective view of a further possible embodiment of the container according to the invention;
figure 10 is a perspective view slightly from above of another example embodiment of a container according to the present invention;
figure 11 is a view similar to figure 10 of another example embodiment of a container according to the present invention;
figure 12 is a perspective view slightly from above of a welding and cutting group for obtaining a container according to the present invention;
figure 13 is a side view of the group of figure 12; and
figure 14 is a perspective view slightly from above of a component of the group of figure 12.

### EMBODIMENTS OF THE INVENTION.

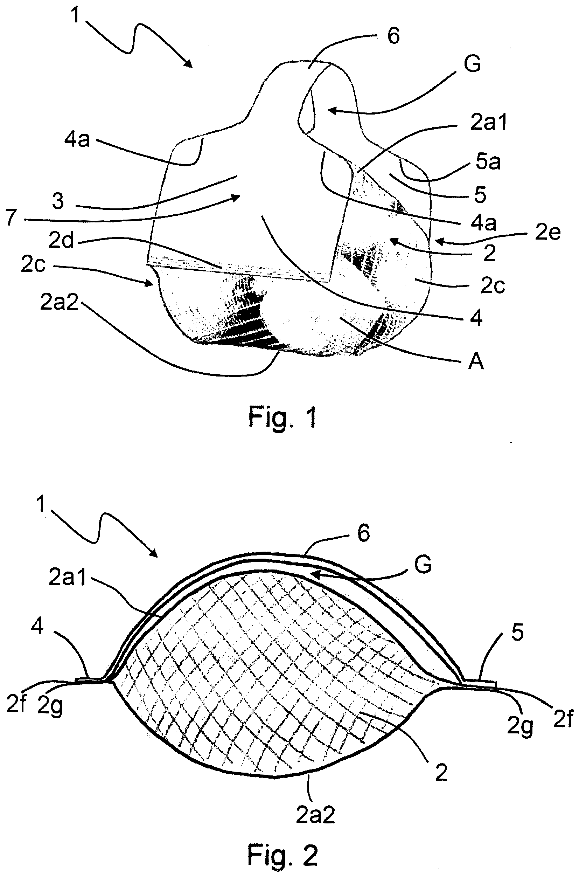

With reference in particular to the attached figures 1-3, a container for fruit and vegetable products, according to the present invention, is wholly indicated with 1.

The container 1 for fruit and vegetable products A comprises at least one closed mesh casing 2 for storing the products A.

The container 1 also comprises at least one shaped band 3.

The mesh casing 2, if so desired having a substantially tubular body, includes a first face 2a1, a second face 2a2 and two side walls 2b and 2c.

According to the present invention, the shaped band is fixed solely to the first face 2a1 of the container, whereas the second face 2a2 is free or not engaged or in contact with the band 3.

The tubular body comprises a first end 2d and a second end 2e each defined between respective end sections 2f, 2g (figure 2) of the first face 2a1 and of the second face 2a2. The substantially tubular body, moreover, is closed at its ends 2d, 2e through respective welding sections and the shaped band is fixed to the mesh casing 2 solely at both the ends 2d, 2e.

Preferably, the shaped band comprises at least one first end portion 4 and at least one second end portion 5 suitable for being associated with the respective ends to the mesh casing 2.

Even more preferably, the shaped band 3 also comprises at least one intermediate portion 6, if so desired narrower for connecting between the first end portion 4 and the second end portion 5.

The intermediate portion 6 is suitable for making a hand grip for the user, so as to allow optimal visibility of the fruit and vegetable products A packed and easy and safe transportation thereof.

In particular, at least one from the first end portion 4 and the second end portion 5 defines at least one extended surface 7 suitable for the application of writing, logos and the like, as represented in figure 2.

In a possible solution, represented in figures 1-3, both the first end portion 4 and the second end portion 5 can each comprise a respective surface 7 for the application of writing, imprints and the like; moreover, the first end portion 4 and the second end portion 5 can comprise at least two respective opposite side walls 4a, 5a converging in the direction of the narrower intermediate portion 6.

In particular, the ends of the first end portion 4 and of the second end portion 5 of the shaped band 3 are associated with respective ends of the mesh casing 2. The shaped band 3 and the mesh are preferably made from synthetic material, so that at least the ends of the first end portion 4 and of the second end portion 5 can be associated through welding with the mesh casing 2.

Moreover, for example in the case in which a particularly thin mesh is required, the shaped band 3 can be associated with the mesh casing 2 through welding at least of the ends of the first end portion 4 and of the second end portion 5 to the mesh itself, if so desired, with the interposition of respective pieces made from strengthening synthetic material. Such a solution is not represented in the figures.

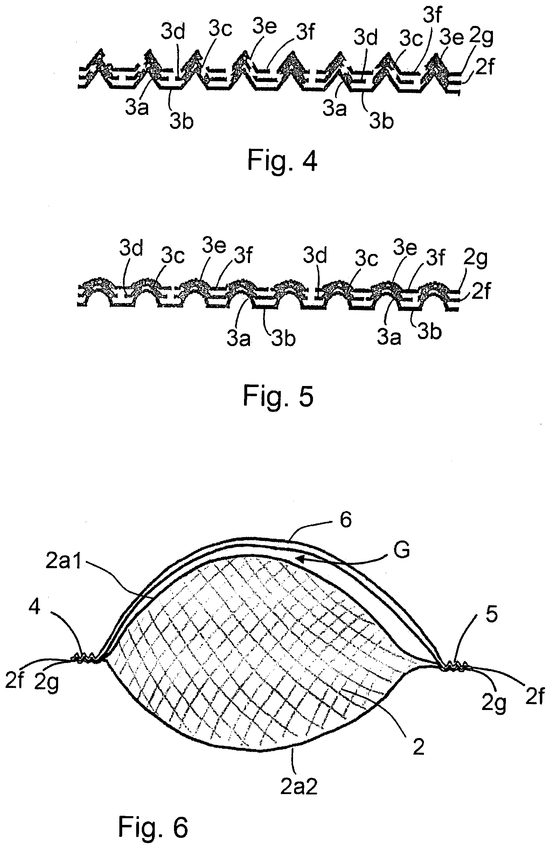

The casing 2 and/or the band 3 at the respective attachment area can be flat, as illustrated in figure 2, or they may not be flat, as illustrated in particular in figure 6.

In this version, the casing 2 and/or the band 3 have a substantially corrugated or undulating configuration, so that the contact surface between them is greater than that between two contact portions (of the band and of the casing) that are both substantially flat. Moreover, the band, at the attachment area, has a substantially corrugated configuration, so as to comprise, from one side wall to the other of the bag, raised portions 3a alternating with recessed portions 3b.

It should be noted that the raised portions 3a define convexities facing towards the end sections 2f, 2g of an end 2d, 2e of the container or bag, whereas the recessed portions 3b define concavities facing towards the end sections 2f, 2g of an end 2d, 2e of the container, so as to have an attachment area that has a greater extension than an attachment area that lies entirely on one same plane and also shaped attachment portions so as to increase the stability and secureness of the attachment.

Concerning this, the raised portions 3a and/or the recessed portions 3b can comprise V-shaped sections (see figure 4), U-shaped sections (see figure 5) or substantially curved sections of the band or label.

The raised portions 3a of a band component or label can, in use, be housed in, and welded to respective hollow portions 3c of a first end section 2f of an end 2d, 2e of the casing, whereas the recessed portions 3b of a band or label can, in use, be housed in, and welded to respective projecting portions 3d of a first end section 2f of an end 2d, 2e.

The hollow portions 3c of an end section 2f will, in this case, alternate with projecting portions 3d thereof.

According to a version of the present invention, the hollow portions 3c will in turn be housed in, and welded to respective channel portions 3e of the other or second end section 2g of an end 2d, 2e, whereas the projecting portions 3d of a label are, in use, welded to respective projecting portions 3f of the other or second end section 2g of an end 2d, 2e.

The channel portions 3e of an end section 2g will alternate with projecting portions 3f thereof.

Preferably, between band or rather between the intermediate portion 6 and the first face 2a1, see figures 1, 2 and 6, a gap G is defined.

The band can, of course, have a different width or length.

In a container according to the present invention, as will be understood, it is possible to use a smaller amount of label/labels than the solutions presented earlier, taking into account the fact that it has one or more bands, each fixed just on one face, first (front) or second (rear if so desired), or rather just on one face of one or both of the ends 2d, 2e of the container or bag itself.

This is possible in particular precisely due to the characteristic according to which the attachment area of the label to a respective face of the mesh casing is not flat or in any case does not lie in a single plane, but has raised portions 3a and recessed portions 3b and, if so desired, hollow portions 3c and projecting portions 3d, channel portions 3e and projecting portions 3f, which make it possible to obtain a larger contact surface and with suitably shaped sections so as to improve the anchoring or attachment with respect to bags with conventional labels that, indeed, have a substantially flat surface or attachment area.

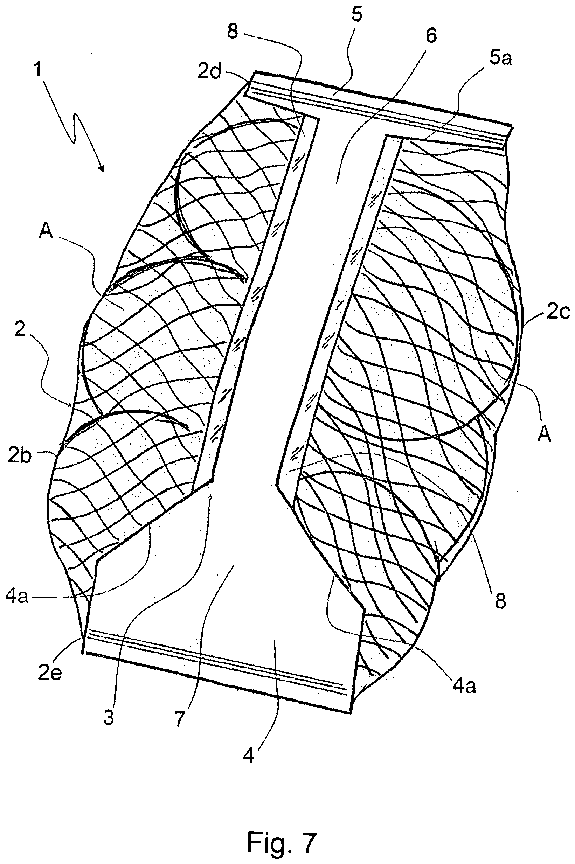

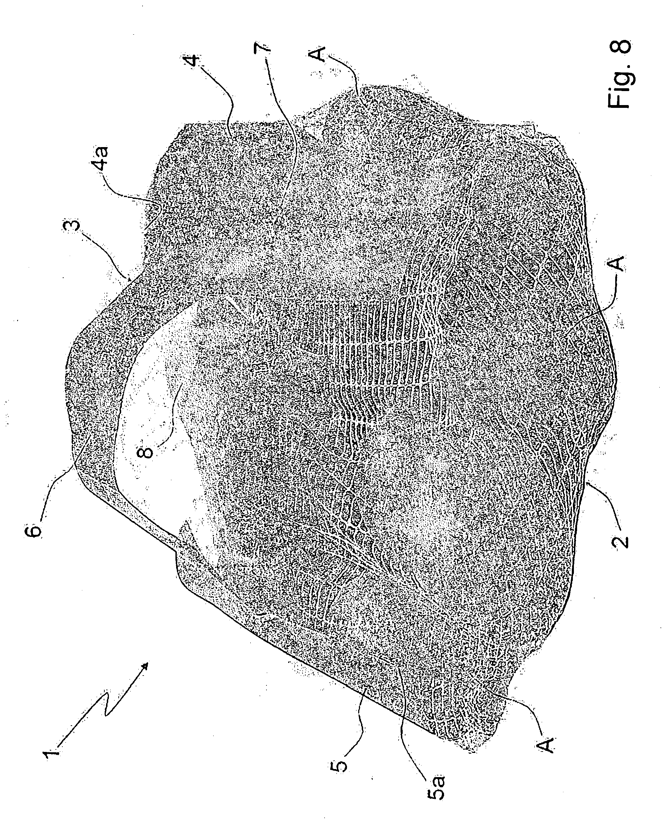

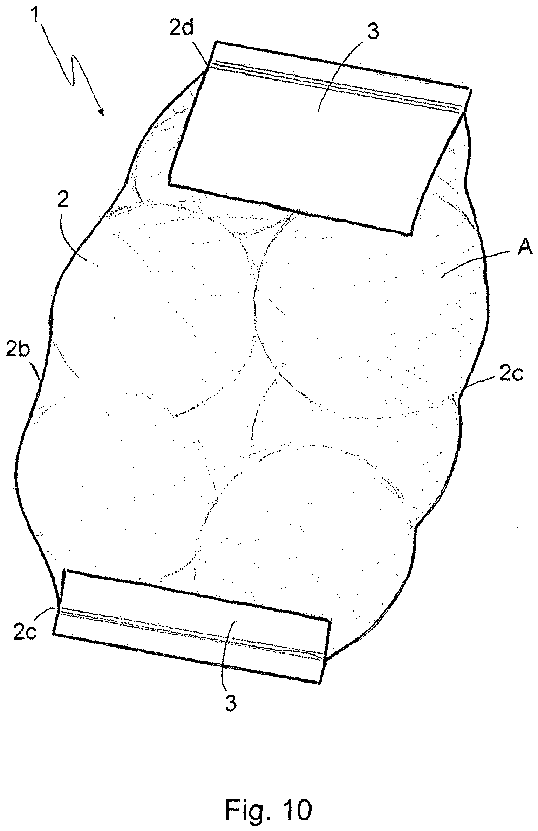

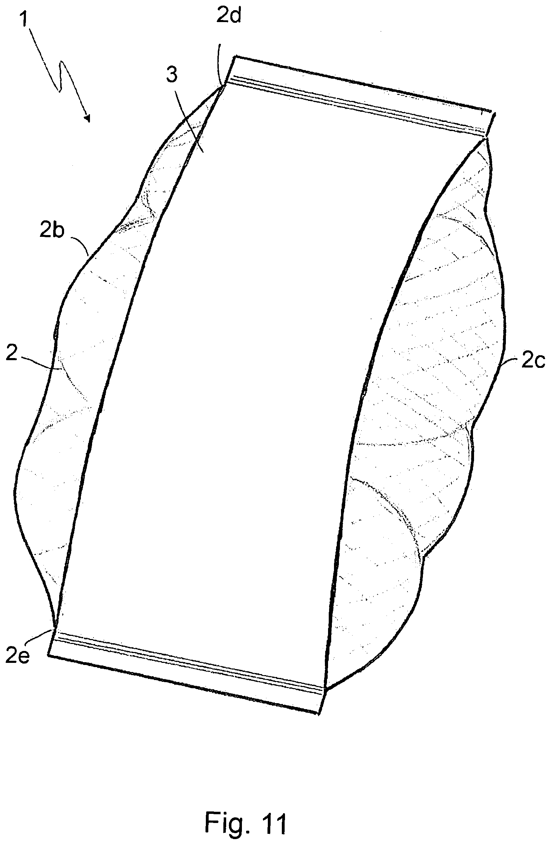

If so desired, a container according to the present invention could comprise one or more bands 3, each fixed solely at an end 2d or 2e of the mesh casing (see figure 10), or it extends from one end 2d to the other 2e and is fixed just at the ends 2d and 2e of the mesh casing (see figures 1-3, 6, 7, 8, 9 or 11).

Therefore, in such a second case, the band component or label 3 would be detached or in any case not fixed to the mesh casing 2 in the portions of the first face 2a1 for connecting between the top and bottom ends 2d, 2e.

Alternatively, the mesh casing 2 could be folded upon itself, or undulated, or rolled up, at the attachment end to the band so as to still allow a contact surface to be obtained between them that is larger than that between two contact portions (of the band and of the casing) that are both substantially flat.

According to a further version (not illustrated) of the present invention in the lower part of the casing 2, substantially at the second face 2a2, it is possible to insert a sheet of soft material, or bubbled material, which allows the most delicate fruit and vegetable products to be protected.

Hereafter we will describe the method for making the container 1 and for packing such products A, according to the present invention.

The method comprises the steps of providing at least one mesh made from synthetic material, feeding the products A to be packed into the mesh, welding the mesh so as to enclose the products A, cutting the mesh so as to make the aforementioned closed mesh casing 2, associating at least one shaped band 3 with the mesh casing 2 through welding. In the case of the container of figures 1-3, 6, 7, 8, 9 or 11, it is envisaged to weld at least the ends of the first end portion 4 and of the second end portion 5 to the mesh itself.

In particular, the quoted steps of welding the mesh so as to enclose the products A and of welding at least the ends of the first end portion 4 and of the second end portion 5 to the mesh can take place in a single operating step.

In greater detail, the method can comprise the step of providing a mesh of the flat type, for example taken from a storage reel, arranging the mesh around a tubular element with the side edges overlapping, welding it at such edges so as to give it a tubular structure, feeding the products A to be packaged, welding the mesh so as to enclose the products A, cutting the mesh so as to make the closed mesh casing 2.

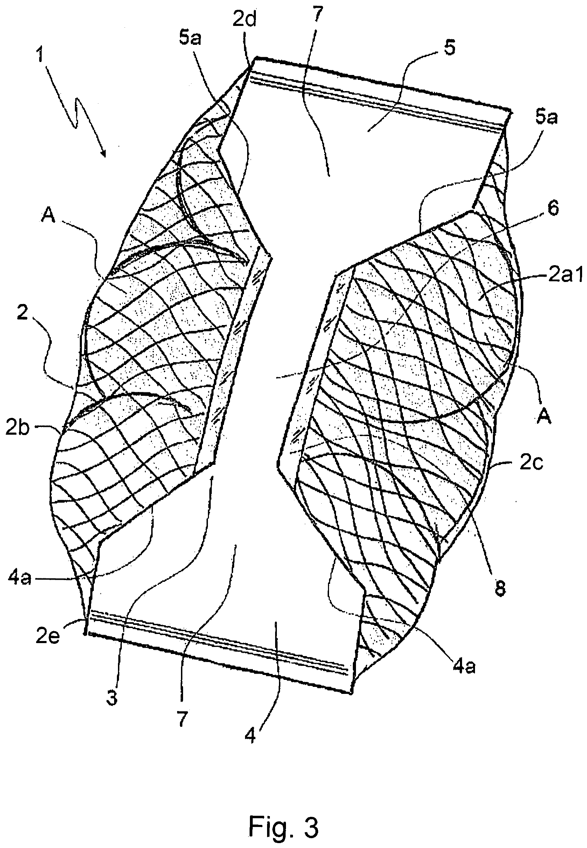

In the case in which it is required for example to use a particularly thin flat mesh, the step of welding the edges of the mesh wound on the tubular element can take place with the interposition of a strip 8 of strengthening synthetic material, to ensure the hold of the weld itself, as illustrated for example in the solutions of figures 3, 7 and 8.

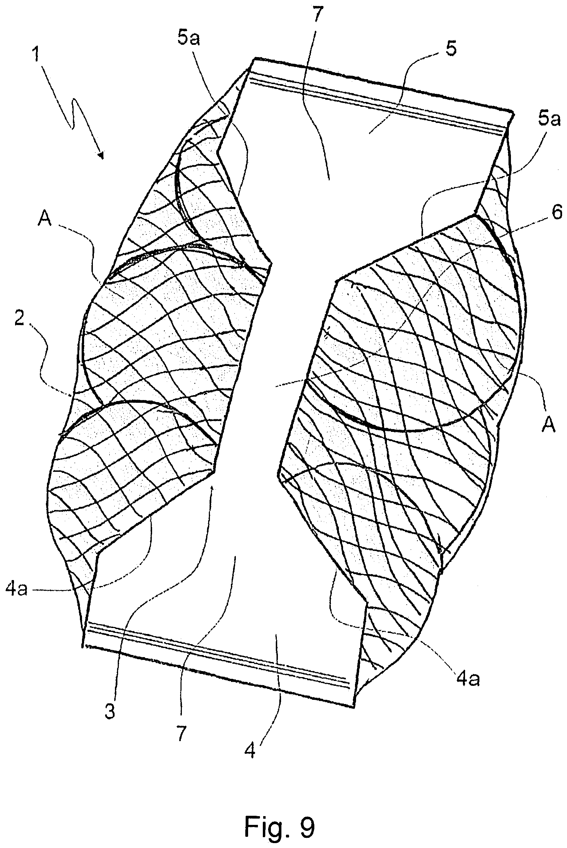

Figure 9 on the other hand illustrates a solution similar to that of figure 3, but without the strip 8 of strengthening synthetic material.

Otherwise, the flat mesh can comprise a side edge previously associated with a strip of synthetic material, and once arranged around the tubular element with at least the quoted strip overlapping the other free side edge, it is welded at at least the strip and at the other free edge, so as to give it a tubular structure.

The welding can take place by overlapping just the strip and the free side edge, or overlapping the strip with the respective edge associated with the free side edge.

Or even both of the side edges of the flat mesh can be associated in advance with respective strips of synthetic material, and once the mesh has been arranged around the tubular element with at least the strips overlapping, it is welded at at least such strips so as to give it a tubular structure.

The welding can take place by overlapping just the strips, or the strips and an edge or both edges of the mesh.

Alternatively it is possible for a mesh to be provided directly already of the tubular type, also stored in a respective reel.

The solutions comprising the strips are not represented in the figures.

The method for obtaining a bag according to the present invention also comprises an attachment step, such as welding or thermowelding of the band or label on the casing 2 so as to obtain a sequence of raised portions 3a alternating with recessed portions 3b, as well as, if so desired, hollow portions 3c and projecting portions 3d and/or channel portions 3e and projecting portions 3f.

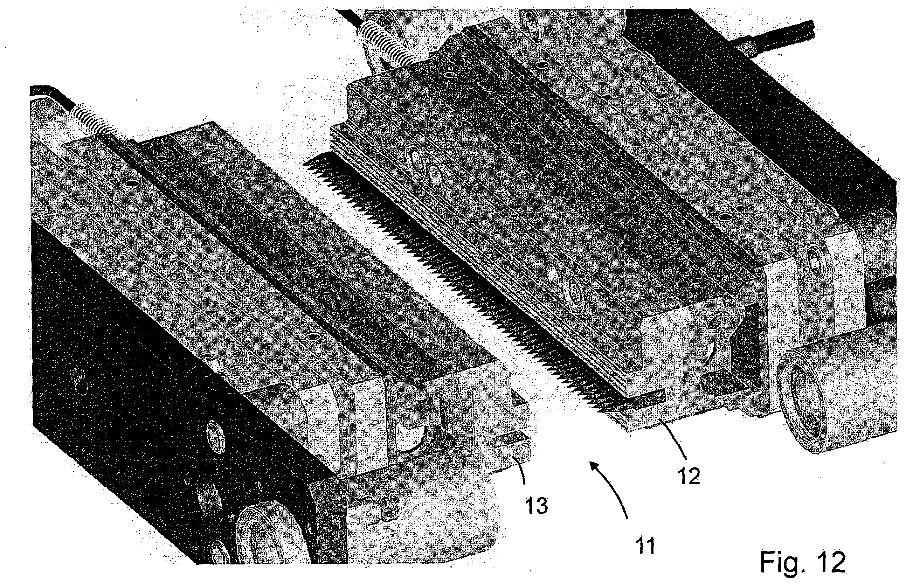

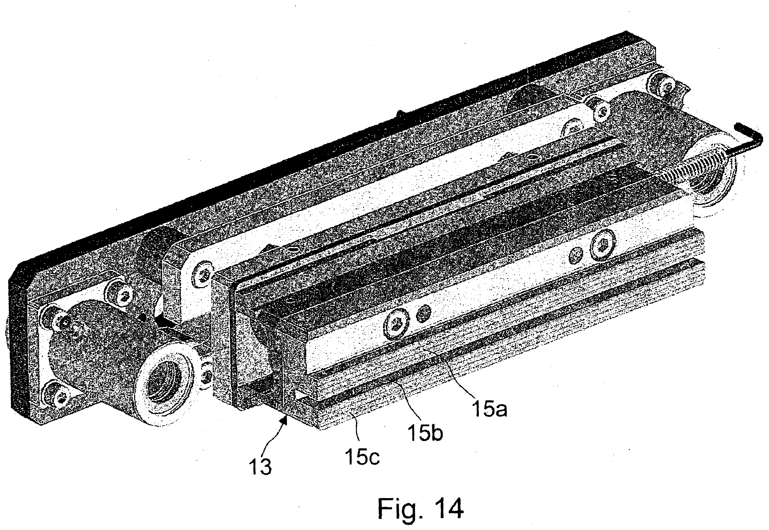

Concerning this, it used a welding group 11, a welding and cutting group 11 as illustrated in figures 12 to 14.

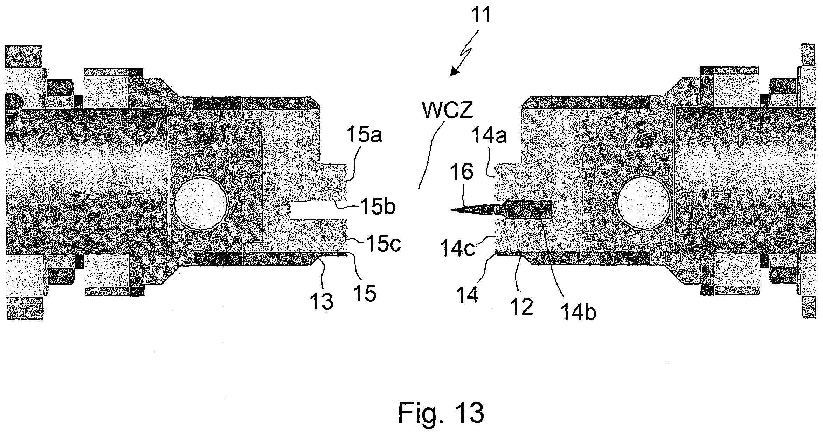

Such a group comprises a pair of half-bodies or jaws 12, 13 able to be moved apart/together, for example through suitable motor means and each having a respective first 14 and second 15 abutment front. The abutment fronts 14, 15 define the welding and cutting area WCZ of the casing 2 (figure 13) between them and they are thus intended to abut against each other to weld the end sections 2f, 2g of an end 2d, 2e as well as to weld or thermoweld one or more bands 3 on them.

With particular reference to the abutment front 14, it comprises at least one welding section.

From one side, for example the top, to the other, for example the bottom, the abutment front 14 can comprise a first welding section 14a, thus a housing recess 14b in which it is possible to fix a blade or knife 16 that projects, in use, with respect to the abutment front 14, and finally a second welding section 14c, for example substantially aligned with the first section 14a.

The abutment front 15, on the other hand, can comprise at least one welding section configured, in use, to abut and engage a respective welding section of the first abutment front.

The second abutment front, from one side, for example top, to the other, for example bottom, can comprise a first welding section 15a configured, in use, to abut and engage the first welding section 14a, therefore a housing recess 15b, configured, in use, to receive the blade or knife 16, and finally a second welding section 15c, for example substantially aligned with the first section 15a and configured, in use, to abut and engage the second welding section 14b.

As it has been possible to observe, at least one welding section 14a, 15a, 14c and 15c has a configuration having raised portions, for example V or U-shaped alternating with recessed portions, for example V or U-shaped.

When the half-bodies 12, 13 are positioned close together, the raised portions of the welding section 14a or 14c of the first abutment front 14 can shape-engage recessed portions of a respective welding section of the second abutment front 15a or 15c, whereas the raised portions of the welding section 15a or 15c of the second abutment front 15 shape-engage recessed portions of a respective welding section 14a, 14c of the second abutment front 14. The configuration with raised and recessed portions of one or more welding sections, makes it possible, as will be understood, to obtain the corrugated configuration raised portions 3a and recessed portions 3b - indicated above of the band component or of the label 3, as well as, if so desired, the hollow portions 3c, the projecting portions 3d, the channel portions 3e and the projecting portions 3f of the end sections 2f, 2g.

It is also possible to envisage suitable heating means (not illustrated in the drawings) of one or both of the abutment fronts 14, 15.

With such a group, the casing to be welded as well as the band component or label 3 to be fixed to it are fed between the two abutment fronts 14 and 15 until one end, for example the bottom 2e, of the casing 2 is at the level of the first welding sections 14a and 15a of the group. At this point the group is commanded to close or the two jaws 12 and 13 are commanded to come together, so as to weld the bottom end 2e of the casing and in this way obtained the bottom of a respective bag 1. Possibly, in such a step, it is possible to feed a band or label 3 between the casing and one of the welding sections 14a and 15a, so as to weld or thermoweld it to the bottom of the bag.

Thereafter, the welding and cutting group 11 is commanded to open or the half-bodies or jaws 12, 13 are commanded to move apart, and the casing 2 with the bottom end 2e welded is made to move in steps, with any suitable means, such as belts or rollers or by acting (pulling) on the bottom of the casing, until the top end 2d of the casing is at or at the level of the welding sections 14c and 15c.

At this point, the loose products to be packed are fed into the casing with bottom or lower end 2e closed and, thereafter, the group is commanded to close or the two jaws 12 and 13 are commanded to move together, so as to weld the upper end 2d of the casing and in this way obtain the closed top of a respective bag. Possibly, in such a step it is possible to feed a band or label between the casing 2 and one of the welding sections 14c and 15c, so as to weld it to the top of the bag. If, moreover, a label had been welded to the bottom of the bag that is now closed at the top, during such a welding step of the top of the bag it is possible, if so desired, to fix the other end of the label 3 fixed to the bottom of the bag to the top end of the bag. In order to do this, suitable means for holding and guiding the label must of course been provided.

As can be understood, thanks to the presence of welding sections 14a and 15a and/or of welding sections 14c and 15c configured as stated above (raised portions alternating with recessed portions), it is possible to obtain the welding or attachment of a band or label to a casing only at a face thereof and at one or both ends, without however engaging the connecting portion or section between the ends of the casing.

Such a provision, as we have said, makes it possible to widen and improve the attachment or welding area of the band or label to the mesh casing with respect to the solutions proposed up to now and thus to avoid envisaging band or label portions arranged on both sides or faces of the casing and welded to one another with interposition of the casing or rather of the ends thereof. Such portions are necessary in the prior solutions proposed to ensure a good seal or in any case firm and stable anchoring of the label to the casing.

The way of using the container for fruit and vegetable products 1, according to the invention is, according to what is described, totally intuitive.

As seen, the particular configuration of the shaped band 3, with the narrower intermediate portion 6 (if provided), and the first end portion 4 and the widened second end portion 5, leaves large areas of the mesh casing 2 in view, allowing the user to see the fruit and vegetable products A packed inside in an optimal manner.

It should be noted how on the shaped band 3 it is possible to display (in particular on the surfaces 7, but also on the intermediate portion 6) any information concerning the goods, nutrition, storage and expiry date of the products, and the like, as well as writing and commercial data, producer's logos, and yet more data.

Moreover, the intermediate portion 6 of the shaped band 3 constitutes a safe and easy handle for the user, so that they can transport the container 1 with the packed products A easily and without the risk of it breaking, also thanks to the possible presence of tissues, and/or strips 8 and strengthening strips, suitably welded as needed as described earlier.

As seen, the hand grip for the user is made directly and simply thanks to the intermediate portion 6 of the band 3 suitably associated with the mesh casing 2, without additional processing steps of the container 1 being carried out, as happens, on the other hand, for known types of containers.

Thanks to a bag and to a method for obtaining it according to the present invention it is moreover possible to obtain a substantial reduction in the material of the band or label used to make a container or bag, at the same time obtaining an anchoring of the label to the mesh casing that is just as reliable and firm as, if not better than, prior solution.

The invention, thus conceived, makes it possible to obtain important technical advantages.

An important technical advantage consists of the fact that the container 1 for fruit and vegetable products A allows optimal visibility of the products contained inside it, so as to allow the user to easily and quickly check the appearance, the integrity and the cleanliness of the products A themselves.

As seen, the container 1 can also be transported easily and safely by the user, thanks to the hand grip made through the intermediate portion 6 of the shaped band 3.

The method for making the container 1 and for packing the products A requires, as seen, simple and quick processing steps - including those for obtaining the hand grip - thus allowing advantages in terms both of reduction of production time and costs.

It has thus been seen how the invention achieves the proposed purposes.

The present invention has been described according to preferred embodiments, but equivalent variants can be devised without departing from the scope of protection offered by the following claims.

## Claims

1. Container for fruit and vegetable products, comprising at least one closed mesh casing (2) for storing the products (A), and at least one shaped band (3), said mesh casing (2) having a first face (2a1), a second face (2a2) and two side walls (2b, 2c), wherein said at least one shaped band (3) is fixed solely to said first face (2a1) of said container, whereas said second face (2a2) is free or not engaged or in contact with said at least one band (3) and **characterised in that** said mesh casing (2) and/or said shaped band (3) at the respective attachment areas are not flat, but have a substantially corrugated or undulating configuration, so that the contact surface between them is larger than that between two contact portions that are both substantially flat.

2. Container according to claim 1, **characterised in that** said mesh casing (2) comprises a first end (2d) and a second end (2e) each defined between respective end sections (2f, 2g) of said first face (2a1) and of said second face (2a2), said mesh casing (2) being closed at its ends (2d, 2e) through respective welding sections and **in that** said at least one shaped band (3) is fixed to said first face (2a1) of said mesh casing (2) solely at both said ends (2d, 2e).

3. Container according to claim 1 or 2, **characterised in that** said band comprises at least one first end portion (4) and at least one second end portion (5) associable with at least the respective ends to said mesh casing (2), and comprising at least one narrower intermediate portion (6) for connecting between said first end portion (4) and said second end portion (5), said intermediate portion (6) being suitable for making a handgrip for the user, so as to allow optimal visibility of the fruit and packaged vegetable products (A) and easy and safe transportation thereof.

4. Container for fruit and vegetable products according to claim 3, wherein at least the ends of said first end portion (4) and of said second end portion (5) of said shaped band (3) are associated with respective ends of said mesh casing (2).

5. Container according to claim 1, **characterised in that** said at least one band (3) is fixed solely at just one end (2d, 2e) of said mesh casing (2).

6. Container for fruit and vegetable products according to one of the previous claims, wherein said band is associated with said mesh casing (2) through welding.

7. Container for fruit and vegetable products according to any one of the previous claims when dependent on claim 3, wherein said shaped band (3) is associated with said mesh casing (2) through welding of at least the ends of said first end portion (4) and of said second end portion (5) to said mesh with the interposition of at least respective pieces of strengthening synthetic material.

8. Container according to any one of the previous claims, **characterised in that** said band at the attachment area to said mesh casing (2) has a substantially corrugated configuration, so as to comprise, from one side wall to the other, raised portions (3a) alternating with recessed portions (3b).

9. Container according to claim 8 when dependent on claim 2, **characterised in that** said raised portions (3a) define convexities facing towards said end sections (2f, 2g) of an end (2d, 2e) of said casing (2), whereas said recessed portions (3b) define concavities facing towards the end sections (2f, 2g) of an end (2d, 2e) of said casing (2), so as to have an attachment area with greater extension with respect to an attachment area lying in the same plane.

10. Container according to claim 9, **characterised in that** said raised portions (3a) are, in use, housed in, and welded to respective hollow portions (3c) of a first end section (2f) of an end (2d, 2e), whereas said recessed portions (3b) are, in use, housed in, and welded to respective projecting portions (3d) of a first end section (2f) of an end (2d, 2e), the hollow portions (3a) in this case alternating with projecting portions (3b).

11. Container according to claim 10, **characterised in that** said hollow portions (3c) are housed in, and welded to respective channel portions (3e) of the other or second end section (2g) of an end (2d, 2e) of said casing, whereas said projecting portions (3d) of a label are, in use, welded to respective projecting portions (3f) of the other or second end section (2g) of an end (2d, 2e), said channel portions (3e) of an end section (2g) alternating with projecting portions (3f) thereof.

12. Container according to any one of the previous claims, **characterised in that** said at least one band (3) is detached or in any case is not fixed to said mesh casing (2) in the portions of said first face (2a1) for connecting between said first (2d) and said second (2e) end.

13. Container according to any one of the previous claims, **characterised in that** it comprises a sheet of soft material, or bubbled material in the lower part of the casing (2), substantially at the second face (2a2), which makes it possible to protect more delicate fruit and vegetable products.

14. Method for making the container (1) and for packing such products (A), according to one of the previous claims, comprising the steps of:
- supplying at least one mesh in synthetic material, feeding the products (A) to be packed into said mesh,
- welding said mesh so as to enclose the products (A), cutting said mesh so as to make said closed mesh casing (2),
- associating at least one said shaped band (3) with said mesh casing (2) through welding,
**characterised in that** it comprises the following steps:
- providing at least one welding group (11) comprising a pair of half-bodies or jaws (12, 13) able to be moved apart/together, a first half-body (12) having a first abutment front (14), whereas a second half-body comprises a second abutment front (15), said first abutment front (14) comprising at least one welding section (14a, 15a) and said second abutment front (15) having at least one welding section (15a, 15c) configured, in use, to abut and engage the welding section (14a, 14c) of said first abutment front (14), wherein at least one welding section (14a, 14c, 15a, 15c) of said first (14) and/or said second (15) abutment front has a configuration having raised portions alternating with recessed portions,
- feeding said casing (2) and said band (3) between said abutment fronts (14, 15), so that said label is arranged between said casing (2) and at least one welding section (14a, 14c) of said first abutment front (14) and at least one welding section (15a, 15c) of said second abutment front (15);
- commanding said jaws to come together, so as to weld the label (3) to a face of said casing (2).

15. Method according to the previous claim, comprising the step of providing said mesh of the flat type, arranging it around a tubular element with overlapping side edges, welding at said edges so as to give it a tubular structure.

16. Method according to the previous claim, comprising the step of providing said flat mesh, arranging it around a tubular element with the side edge overlapping, welding it at said edges with the interposition of a strip (8) of strengthening synthetic material, so as to give it a tubular structure.

17. Method according to claim 15 or 16, comprising the step of providing said flat mesh comprising at least one side edge previously associated with a strip of synthetic material, or comprising the side edges previously associated with respective strips of synthetic material, arranging it around a tubular element with at least said strip overlapping the other free side edge, welding it at at least said strip and at said other free edge, or said strips, so as to give it a tubular structure.

18. Method according to claim 14, comprising the step of providing said mesh directly of the tubular type.

19. Method according to any one of claims 14 to 18 for making the container according to claim 3, comprising the step of welding at least the ends of said first end portion (4) and of said second end portion (5) of said shaped band (3) to said mesh casing (2) with the interposition of respective tissues of strengthening synthetic material.

20. Method according to any one of claims 14 to 19, **characterised in that** when said half-bodies (12, 13) are brought together, the raised portions of at least one welding section (14a, 14c) of said first abutment front (14) shape-engage recessed portions of a respective welding section of said second abutment front (15a, 15c), and the raised portions of at least one welding section (15a, 15c) of said second abutment front (15) shape-engage recessed portions of a respective welding section (14a, 14c) of said second abutment front (14), the configuration with raised and recessed portions of one or more welding sections, so as to obtain the corrugated configuration of said at least one band (3).

## Patentansprüche

1. Behältnis für Obst- und Gemüseprodukte, umfassend mindestens eine geschlossene Netzhülle (2) für die Aufnahme der Produkte (A) und mindestens ein geformtes Band (3), die besage Netzhülle (2) eine erste Fläche (2a1), eine zweite Fläche (2a2) und zwei Seitenwände (2b, 2c) aufweist, worin das besagte mindestens eine geformte Band (3) ausschließlich an der besagten ersten Fläche (2a1) des besagten Behältnisses befestigt ist, wohingegen die besagte zweite Fläche (2a2) frei oder nicht in Eingriff oder in Kontakt mit dem besagten mindestens einen Band (3) ist und **dadurch gekennzeichnet, dass** die besagte Netzhülle (2) und/oder das besagte geformte Band (3) an den entsprechenden Befestigungsbereichen nicht flach sind, sondern eine im Wesentlichen gerippte oder gewellte Ausbildung aufweisen, so dass die Kontaktfläche zwischen ihnen breiter ist als diejenige zwischen zwei Kontaktabschnitten, die beide im Wesentlichen flach sind.

2. Behältnis nach Anspruch 1, **dadurch gekennzeichnet, dass** die besagte Netzhülle (2) ein erstes Ende (2d) und ein zweites Ende (2e) umfasst, jeweils ausgebildet zwischen entsprechenden Endbereichen (2f, 2g) der besagten ersten Fläche (2a1) und der besagten zweiten Fläche (2a2), die besagte Netzhülle (2) an ihren Enden (2d, 2e) geschlossen ist durch entsprechende Schweißabschnitte und dadurch, dass mindestens ein geformtes Band (3) an der besagten ersten Fläche (2a1) der besagten Netzhülle (2) ausschließlich an den beiden besagten Enden (2d, 2e) befestigt ist.

3. Behältnis nach Anspruch 1 oder 2, **dadurch gekennzeichnet, dass** das besagte Band mindestens einen ersten Endabschnitt (4) und mindestens einen zweiten Endabschnitt (5) umfasst, verbindbar mit mindestens den entsprechenden Enden der besagten Netzhülle (2), und umfassend mindestens einen schmaleren Zwischenabschnitt (6) zur Verbindung zwischen dem besagten ersten Endabschnitt (4) und dem besagten zweiten Endabschnitt (5), der besagte Zwischenabschnitt (6) zum Herstellen eines Handgriffs für den Benutzer geeignet ist, um eine optimale Sicht auf das Obst und die verpackten Gemüseprodukte und einen leichten und sicheren Transport davon zu ermöglichen.

4. Behältnis für Obst- und Gemüseprodukte nach Anspruch 3, worin mindestens die Enden des besagten ersten Endabschnittes (4) und des besagten zweiten Endabschnittes (5) des besagten geformten Bandes (3) mit entsprechenden Enden der besagten Netzhülle (2) verbunden sind.

5. Behältnis nach Anspruch 1, **dadurch gekennzeichnet, dass** das besagte mindestens eine Band (3) ausschließlich an nur einem Ende (2d, 2e) der besagten Netzhülle (2) befestigt ist.

6. Behältnis für Obst- und Gemüseprodukte nach einem der vorangegangenen Ansprüche, worin das besagte Band durch Schweißen mit der besagten Netzhülle (2) verbunden ist.

7. Behältnis für Obst- und Gemüseprodukte nach irgendeinem der vorangegangenen Ansprüche, wenn abhängig von Anspruch 3, worin das besagte geformte Band (3) mit der besagten Netzhülle (2) verbunden ist durch Schweißen von mindestens den Enden des besagten ersten Endabschnittes (4) und des besagten zweiten Endabschnittes (5) an das besagte Netz unter Zwischenlage von mindestens entsprechenden Stücken verstärkenden Synthetikmaterials.

8. Behältnis nach irgendeinem der vorangegangenen Ansprüche, **dadurch gekennzeichnet, dass** das besagte Band am Befestigungsbereich mit der besagten Netzhülle (2) eine im Wesentlichen gerippte Ausbildung aufweist, um von einer Seitenwand zur anderen erhöhte Abschnitte (3a) im Wechsel mit vertieften Abschnitten (3b) zu umfassen.

9. Behältnis nach Anspruch 8, wenn abhängig von Anspruch 2, **dadurch gekennzeichnet, dass** die besagten erhöhten Abschnitte (3a) Konvexitäten bilden, die den Endbereichen (2f, 2g) eines Endes (2d, 2e) der besagten Hülle (2) zugewandt sind, worin die besagten vertieften Abschnitte (3b) Konkavitäten bilden, die den Endbereichen (2f, 2g) eines Endes (2d, 2e) der besagten Hülle (2) zugewandt sind, um einen Befestigungsbereich mit größerer Erstreckung in Bezug auf einen in der gleichen Ebene liegenden Befestigungsbereich zu haben.

10. Behältnis nach Anspruch 9, **dadurch gekennzeichnet, dass** die besagten erhöhten Abschnitte (3a) verwendet werden mit, untergebracht sind in und verschweißt sind mit entsprechenden hohlen Abschnitten (3c) eines ersten Endbereichs (2f) eines Endes (2d, 2e), worin die besagten vertieften Abschnitte (3b) verwendet werden mit, untergebracht sind in und verschweißt sind mit entsprechenden vorstehenden Abschnitten (3d) eines ersten Endbereichs (2f) eines Endes (2d, 2e), wobei die hohlen Abschnitte (3a) in diesem Fall mit den vorstehenden Abschnitten (3b) alternieren.

11. Behältnis nach Anspruch 10, **dadurch gekennzeichnet, dass** die besagten hohlen Abschnitte (3c) untergebracht sind in und verschweißt sind mit entsprechenden Kanalabschnitten (3e) des anderen oder des zweiten Endbereichs (2g) eines Endes (2d, 2e) der besagten Hülle, worin die besagten vorstehenden Abschnitte (3d) eines Etiketts verwendet werden mit, verschweißt sind mit entsprechenden vorstehenden Abschnitten (3f) des anderen oder des zweiten Endbereichs (2g) eines Endes (2d, 2e), wobei die besagten Kanalabschnitte (3e) eines Endbereichs (2g) mit den vorstehenden Abschnitten (3b) davon alternieren.

12. Behältnis nach irgendeinem der vorangegangenen Ansprüche, **dadurch gekennzeichnet, dass** das besagte mindestens eine Band (3) getrennt oder in jedem Fall nicht befestigt ist an der besagten Netzhülle (2) in den Abschnitten der besagten ersten Fläche (2a1) zur Verbindung zwischen dem besagten ersten (2d) und dem besagten zweiten (2e) Ende.

13. Behältnis nach irgendeinem der vorangegangenen Ansprüche, **dadurch gekennzeichnet, dass** es eine Folie aus weichem Material oder Luftpolstermaterial im unteren Teil der Hülle (2), im Wesentlichen auf der zweiten Fläche (2a2), umfasst, die es ermöglicht, empfindlichere Obst und Gemüseprodukte zu schützen.

14. Verfahren zum Herstellen des Behältnisses (1) und zum Verpacken solcher Produkte (A) nach einem der vorangegangenen Ansprüche, umfassend die Schritte:
- Zuführen von mindestens einem Netz aus Synthetikmaterial (A), Beschicken der Produkte (A), die in dem Netz verpackt werden sollen,
- Schweißen des besagten Netzes, um die Produkte (A) zu umschließen, Schneiden des besagten Netzes, um die besagte geschlossene Netzhülle (2) herzustellen,
- Verbinden von mindestens einem besagten geformten Band (3) mit der besagten Netzhülle (2) durch Schweißen,
**dadurch gekennzeichnet, dass** es die folgenden Schritte umfasst:
- Bereitstellen von mindestens einer Schweißgruppe (11), umfassend ein Paar von Halbkörpern oder Backen (12, 13), die auseinander-/zusammenbewegt werden können, einen ersten Halbkörper (12) mit einer ersten Anschlagfront (14), wohingegen ein zweiter Halbkörper eine zweite Anschlagfront (15) umfasst, die besagte erste Anschlagfront (14) umfassend mindestens einen Schweißabschnitt (14a, 15a) und die besagte zweite Anschlagfront (15) mindestens einen Schweißabschnitt (15a, 15c) aufweist, der ausgebildet ist, verwendet wird, um am Schweißabschnitt (14a, 14c) der besagten ersten Anschlagfront (14) anzuschlagen und einzugreifen, worin mindestens ein Schweißabschnitt (14a, 14c, 15a, 15c) der besagten ersten (14) und/oder der besagten zweiten (15) Anschlagfront eine Ausbildung hat, die erhöhte Abschnitte im Wechsel mit vertieften Abschnitten aufweist,
- Zuführen der besagten Hülle (2) und des besagten Bandes (3) zwischen die besagten Anschlagfronten (14, 15), so dass das besagte Etikett zwischen der besagten Hülle (2) und mindestens einem Schweißabschnitt (14a, 14c) der besagten ersten Anschlagfront (14) und mindestens einem
Schweißabschnitt (15a, 15c) der besagten zweiten Anschlagfront (15)angeordnet ist;
- Steuern der besagten Backen, um derartig zusammenzutreffen, dass das Etikett (3) mit einer Fläche der besagten Hülle (2) verschweißt wird.

15. Verfahren nach dem vorangehenden Anspruch, umfassend den Schritt des Bereitstellens des besagten Netzes flachen Typs, die Anordnung desselben um ein röhrenförmiges Element herum mit überlappenden Seitenkanten, Schweißen der besagten Kanten, um ihm eine röhrenförmige Struktur zu verleihen.

16. Verfahren nach dem vorangehenden Anspruch, umfassend den Schritt des Bereitstellens des besagten flachen Netzes, die Anordnung desselben um ein röhrenförmiges Element herum mit überlappender Seitenkante, Schweißen der besagten Kanten unter Zwischenlage eines Streifens (8) verstärkenden Synthetikmaterials, um ihm eine röhrenförmige Struktur zu verleihen.

17. Verfahren nach Anspruch 15 oder 16, umfassend den Schritt des Bereitstellens des besagten flachen Netzes, umfassend mindestens eine Seitenkante, die vorher mit einem Streifen aus Synthetikmaterial verbunden wird, oder umfassend die Seitenkanten, die vorher mit entsprechenden Streifen aus Synthetikmaterial verbunden werden, dessen Anordnung um ein röhrenförmiges Element herum mit mindestens dem besagten Streifen die andere freie Kante überlappend, das Schweißen desselben an mindestens den besagten Streifen und an die besagte andere freie Kante, oder an die besagten Streifen, um ihm eine röhrenförmige Struktur zu verleihen.

18. Verfahren nach Anspruch 14, umfassend den Schritt des Bereitstellens des besagten Netzes direkt röhrenartigen Typs.

19. Verfahren nach irgendeinem der Ansprüche 14 bis 18 zum Herstellen des Behältnisses nach Anspruch 3, umfassend den Schritt des Schweißens von mindestens den Enden des besagten ersten Endabschnittes (4) und des besagten zweiten Endabschnittes (5) des besagten geformten Bandes (3) an die besagte Netzhülle (2) unter Zwischenlage entsprechender Gewebe verstärkenden Synthetikmaterials.

20. Verfahren nach irgendeinem der Ansprüche 14 bis 19, **dadurch gekennzeichnet, dass** bei der Zusammenführung der besagten Halbkörper (12, 13) die erhöhten Abschnitte mindestens eines Schweißabschnittes (14a, 14c) der besagten ersten Anschlagfront (14) vertiefte Abschnitte eines entsprechenden Schweißabschnittes der besagten zweiten Anschlagfront (15a, 15c) formen-greifen, und die erhöhten Abschnitte mindestens eines Schweißabschnittes (15a, 15c) der besagten zweiten Anschlagfront (15) vertiefte Abschnitte eines entsprechenden Schweißabschnittes (14a, 14c) der besagten zweiten Anschlagfront (14) formen-greifen, die Ausbildung mit erhöhten und vertieften Abschnitten eines oder mehrerer Schweißabschnitte, um die gerippte Ausbildung des besagten mindestens einen Bandes (3) zu erhalten.

## Revendications

1. Boîte pour fruits et légumes, comprenant au moins un boîtier en filet fermé (2) pour stocker les produits (A), et au moins une bande formée (3), ledit boîtier en filet (2) comportant une première face (2a1), une deuxième face (2a2) et deux parois latérales (2b, 2c), dans lequel ladite au moins une bande formée (3) est fixée seulement à ladite première face (2a1) de ladite boîte, alors que ladite deuxième face (2a2) est libre ou pas engagée ou en contact avec ladite au moins une bande (3), et **caractérisé en ce que** ledit boîtier en filet (2) et/ou ladite bande formée (3) sur les zones de fixation respectives ne sont pas plats, mais ont une configuration sensiblement ondulée, de telle sorte que la surface de contact entre eux soit plus grande que celle entre deux parties de contact toutes les deux sensiblement plates.

2. Boîte selon la revendication 1, **caractérisée en ce que** ledit boîtier en filet (2) comprend une première extrémité (2d) et une deuxième extrémité (2e), chacune définie entre des sections d'extrémité respectives (2f, 2g) de ladite première face (2a1) et de ladite deuxième face (2a2), ledit boîtier en filet (2) étant fermé à ses extrémités (2d, 2e) par l'intermédiaire de sections soudées respectives, et **en ce que** ladite au moins une bande formée (3) est fixée à ladite première face (2a1) dudit boîtier en filet (2) uniquement au niveau desdites deux extrémités (2d, 2e).

3. Boîte selon la revendication 1 ou 2, **caractérisée en ce que** ladite bande comprend au moins une première partie d'extrémité (4) et au moins une deuxième partie d'extrémité (5) pouvant être associée avec au moins les extrémités respectives audit boîtier en filet (2), et comprenant au moins une partie intermédiaire plus étroite (6) pour le raccordement entre ladite première partie d'extrémité (4) et ladite deuxième partie d'extrémité (5), ladite partie intermédiaire (6) étant adaptée pour former une poignée pour l'utilisateur, afin d'assurer la visibilité optimale des fruits et des légumes emballés (A) et leur transport facile et sûr.

4. Boîte pour fruits et légumes selon la revendication 3, dans laquelle au moins les extrémités de ladite première partie d'extrémité (4) et de ladite deuxième partie d'extrémité (5) de ladite bande formée (3) sont associées aux extrémités respectives dudit boîtier en filet (2).

5. Boîte selon la revendication 1, **caractérisée en ce que** ladite au moins une bande (3) est fixée seulement à une extrémité (2d, 2e) dudit boîtier en filet (2).

6. Boîte pour fruits et légumes selon l'une quelconque des revendications qui précèdent, dans laquelle ladite bande est associée audit boîtier en filet (2) par une soudure.

7. Boîte pour fruits et légumes selon l'une quelconque des revendications qui précèdent dépendant de la revendication 3, dans laquelle ladite bande formée (3) est associée audit boîtier en filet (2) par soudure d'au moins les extrémités de ladite première partie d'extrémité (4) et de ladite deuxième partie d'extrémité (5) audit filet avec l'interposition d'au moins des éléments respectifs de matériau synthétique de renfort.

8. Boîte selon l'une quelconque des revendications qui précèdent, **caractérisée en ce que** ladite bande sur la zone de fixation audit boîtier en filet (2) a une configuration sensiblement ondulée, afin de comprendre, d'une paroi latérale à l'autre, des parties relevées (3a) en alternance avec des parties encastrées (3b).

9. Boîte selon la revendication 8 dépendant de la revendication 2, **caractérisée en ce que** lesdites parties relevées (3a) définissent des convexités orientées pour faire face auxdites sections d'extrémité (2f, 2g) d'une extrémité (2d, 2e) dudit boîtier (2), alors que lesdites parties encastrées (3b) définissent des concavités orientées pour faire face aux sections d'extrémité (2f, 2g) d'une extrémité (2d, 2e) dudit boîtier (2), de façon à comporter une zone de fixation d'une extension supérieure par rapport à une zone de fixation reposant dans le même plan.

10. Boîte selon la revendication 9, **caractérisée en ce que** lesdites parties relevées (3a) sont, pendant l'utilisation, contenues dans et soudées à des parties creuses respectives (3c) d'une première section d'extrémité (2f) d'une extrémité (2d, 2e), alors que lesdites parties encastrées (3b) sont, pendant l'utilisation, contenues dans et soudées à des parties saillantes respectives (3d) d'une première section d'extrémité (2f) d'une extrémité (2d, 2e), les parties creuses (3a) alternant dans ce cas avec les parties saillantes (3b).

11. Boîte selon la revendication 10, **caractérisée en ce que** lesdites parties creuses (3c) sont contenues dans, et soudées à des parties de canal (3e) respectives de l'autre ou de la deuxième section d'extrémité (2g) d'une extrémité (2d, 2e) dudit boîtier, alors que lesdites parties saillantes (3d) d'une étiquette sont, pendant l'utilisation, soudées aux parties saillantes (3f) respectives de l'autre ou de la deuxième section d'extrémité (2g) d'une extrémité (2d, 2e), lesdites parties de canal (3e) d'une section d'extrémité (2g) alternant avec les parties saillantes (3f) de celle-ci.

12. Boîte selon l'une quelconque des revendications qui précèdent, **caractérisée en ce que** ladite au moins une bande (3) est détachée ou dans tous les cas n'est pas fixée audit boîtier en filet (2) dans les parties de ladite première face (2a1) pour le raccordement entre ladite première (2d) et ladite deuxième (2e) extrémité.

13. Boîte selon l'une quelconque des revendications qui précèdent, **caractérisée en ce qu'**elle comprend une feuille de matériau souple, ou de matière à bulles dans la partie inférieure du boîtier (2), sensiblement sur la deuxième face (2a2), ce qui permet de protéger les fruits et les légumes plus délicats.

14. Procédé de fabrication de la boîte (1) et de l'emballage de ces produits (A) selon l'une quelconque des revendications qui précèdent, comprenant les étapes de :
- fourniture d'au moins un filet en matériau synthétique, alimentation des produits (A) à emballer dans ledit filet,
- soudure dudit filet de façon à envelopper les produits (A), découpe dudit filet de façon à fermer ledit boîtier en filet (2),
- association d'au moins une desdites bandes formées (3) avec ledit boîtier en filet (2) par soudure,
**caractérisé en ce qu'**il comprend les étapes suivantes :
- fourniture d'au moins un groupe de soudage (11) comprenant une paire de demi-corps ou mâchoires (12, 13) pouvant être déplacés pour s'éloigner/se rapprocher, un premier demi-corps (12) comportant un premier front de butée (14), alors qu'un deuxième demi-corps comprend un deuxième front de butée (15), ledit premier front de butée (14) comprenant au moins une section de soudure (14a, 15a) et ledit deuxième front de butée (15) comportant au moins une section de soudure (15a, 15c) configurée, pendant l'utilisation, pour être en butée et s'engager avec la section de soudure (14a, 14c) dudit premier front de butée (14), dans lequel au moins une section de soudure (14a, 14c, 15a, 15c) dudit premier (14) et/ou dudit deuxième (15) front de butée a une configuration comportant des parties relevées en alternance avec des parties encastrées,
- alimentation dudit boîtier (2) et de ladite bande (3) entre lesdits fronts de butée (14, 15), de telle sorte que ladite étiquette soit disposée entre ledit boîtier (2) et au moins une section de soudure (14a, 14c) dudit premier front de butée (14) et au moins une section de soudure (15a, 15c) dudit deuxième front de butée (15) ;
- commande desdites mâchoires pour se rapprocher, de façon à souder l'étiquette (3) sur une face dudit boîtier (2).

15. Procédé selon la revendication précédente, comprenant l'étape de fourniture dudit filet de type plat, en le positionnant autour d'un élément tubulaire avec des bords latéraux chevauchants, et en soudant lesdits bords de façon à obtenir une structure tubulaire.

16. Procédé selon la revendication précédente, comprenant l'étape de fourniture dudit filet plat, en le disposant autour d'un élément tubulaire avec le bord latéral en chevauchement, le soudant sur lesdits bords avec l'interposition d'une bande (8) de matériau synthétique de renfort, de façon à lui donner une structure tubulaire.

17. Procédé selon la revendication 15 ou 16, comprenant l'étape de fourniture dudit filet plat comprenant au moins un bord latéral précédemment associé à une bande de matériau synthétique, ou comprenant les bords latéraux précédemment associés à des bandes respectives de matériau synthétique, en le disposant autour d'un élément tubulaire avec au moins ladite bande chevauchant l'autre bord latéral libre, le soudant à au moins ladite bande et audit autre bord libre, ou auxdites bandes, de façon à lui donner une structure tubulaire.

18. Procédé selon la revendication 14, comprenant l'étape de fourniture dudit filet directement du type tubulaire.

19. Procédé selon l'une quelconque des revendications 14 à 18 pour réaliser la boîte selon la revendication 3, comprenant l'étape de soudage d'au moins les extrémités de ladite première partie d'extrémité (4) et de ladite deuxième partie d'extrémité (5) de ladite bande formée (3) audit boîtier en filet (2) en interposant des tissus respectifs de matériau synthétique de renfort.

20. Procédé selon l'une quelconque des revendications 14 à 19, **caractérisé en ce que** lorsque lesdits demi-corps (12, 13) sont rassemblés, les parties relevées d'au moins une section de soudure (14a, 14c) dudit premier front de butée (14) s'emboîtent avec les parties encastrées d'une section respective de soudure dudit deuxième front de butée (15a, 15c), et les parties relevées d'au moins une section de soudure (15a, 15c) dudit deuxième front de butée (15) s'emboîtent avec les parties encastrées d'une section de soudure (14a, 14c) respective dudit deuxième front de butée (14), la configuration avec les parties relevées et encastrées d'au moins une section de soudure, de façon à obtenir la configuration ondulée de ladite au moins une bande (3).
